## Europäisches Patentamt
## European Patent Office
## Office européen des brevets

(19)

(11) Numéro de publication: **0 053 952**
**B1**

(12) # FASCICULE DE BREVET EUROPEEN

(45) Date de publication du fascicule du brevet:
06.06.84

(51) Int. Cl.³: **F 23 G 5/00**, F 22 B 31/04

(21) Numéro de dépôt: **81401698.6**

(22) Date de dépôt: **27.10.81**

(54) **Installation d'incinération de déchets à récupération d'énergie.**

(30) Priorité: **05.12.80 FR 8025901**

(43) Date de publication de la demande:
**16.06.82 Bulletin 82/24**

(45) Mention de la délivrance du brevet:
**06.06.84 Bulletin 84/23**

(84) Etats contractants désignés:
**AT BE CH DE FR GB IT LI LU NL SE**

(56) Documents cités:
**DE - A - 1 927 556**
**DE - A - 2 534 092**
**FR - A - 740 542**
**FR - A - 2 443 645**
**GB - A - 1 349 123**
**GB - A - 1 541 353**
**US - A - 4 037 543**

(73) Titulaire: **L'AIR LIQUIDE, SOCIETE ANONYME POUR L'ETUDE ET L'EXPLOITATION DES PROCEDES GEORGES CLAUDE, 75, Quai d'Orsay, F-75321 Paris Cedex 07 (FR)**

(72) Inventeur. **Guillaume, Paul, 175, rue Hartmann, F-94200 Ivry-sur-Seine (FR)**
Inventeur: **Karinthi, Pierre, 44, avenue Albert 1er de Belgique, F-38000 Grenoble (FR)**

(74) Mandataire: **Liboz, André et al, L'AIR LIQUIDE SOCIETE ANONYME POUR L'ETUDE ET L'EXPLOITATION DES PROCEDES GEORGES CLAUDE 75, Quai d'Orsay, F-75321 Paris Cédex 07 (FR)**

**Description**

La présente invention a pour objet une installation de traitement de déchets s'appliquant plus précisément aux traitements thermiques que l'on fait subir à des déchets industriels en vue d'une récupération d'énergie et qui consiste essentiellement à provoquer la combustion et/ou la pyrolyse des déchets dans un four d'incinération et à récupérer la chaleur produite dans le four en assurant un échange thermique entre les fumées issues du four et un fluide d'utilisation de la chaleur ainsi récupérée. L'invention concerne les installations de ce type comprenant un four d'incinération comportant au moins une partie tournante pour la combustion et/ou la pyrolyse des déchets et une partie fixe de guidage des fumées produites dans le four, située entre la partie tournante et un récupérateur dans lequel les fumées circulent en condition d'échange thermique avec un fluide d'utilisation et un circuit de récupération de la chaleur du four formé de conduits dans lesquels circule un fluide calo-porteur. Une installation de ce type est décrite substantiellement dans le brevet GB-A-1 541 353 qui fait allusion, cependant sans le décrire, à un système de récupération possible. A défaut d'indications plus précises, l'enseignement de ce brevet GB-A-1 541 353 est tout à fait insuffisant pour la mise en oeuvre de moyens de récupération thermique assurant un rendement acceptable. De même, on a décrit dans le brevet GB 1 349 123 un appareil pour éliminer les produits imbrûlés contenus dans les gaz issus d'un incinérateur ou analogue et avant leur rejet dans l'atmosphère, du genre comportant une chambre située à l'extrémité du conduit de sortie de fumées et munie intérieurement d'un brûleur et d'un serpentin générateur de vapeur, tandis qu'une chemise de circulation d'eau permet de refroidir les parois de la chambre et peut être relié au serpentin. Il s'agit là d'un appareil qui n'est pas du genre concerné par l'invention et rappelé plus haut.

Le problème à l'origine de la présente invention est essentiellement celui de l'augmentation du rendement de conversion énergétique global et l'amélioration des conditions de combustion des déchets. Selon une caractéristique essentielle de l'invention, le circuit de récupération est formé en dérivation de la circulation du fluide d'utilisation et les conduits de récupération forment des nappes incluant les structures de parois limitant la partie fixe et/ou ladite partie tournante du four et munies éventuellement d'un habillage calorifuge externe. Ainsi, le fluide d'utilisation qui reçoit déjà les calories du récupérateur de chaleur bénéficie d'un apport complémentaire de calories qui sont celles que lui apports le fluide caloporteur après les avoir absorbées de l'ensemble du four. Cet apport complémentaire est d'autant plus important que les nappes de conduits dans lesquelles circule le fluide caloporteur sont structurellement liées aux parois du four, soit que ces nappes forment une enveloppe de four, soit qu'elles forment l'un des éléments constitutifs de ces parois. Une telle configuration entraîne une augmentation du rendement énergétique global de l'installation due à l'amélioration de la récupération de chaleur, non seulement par l'adjonction d'un circuit dérivé sur le circuit d'utilisation, mais également par la structure de ce circuit dérivé qui assure les meilleures conditions de transfert de la chaleur. La circulation du fluide caloporteur dans le circuit de récupération ainsi réalisé refroidit les parois du four et crée des zones d'adsorption de chaleur, l'importance de cette absorption pouvant être réglée en prévoyant par exemple des revêtements réfractaires d'une épaisseur et d'une qualité appropriées.

Ceci permet, en réalisant de façon adéquate des circuits de récupération de la chaleur comportant les parois limitant la partie tournante et la partie fixe du four, d'ajuster le profil thermique à l'intérieur de l'enceinte dudit four pour obtenir la configuration désirée. Il en résulte une conséquence inattendue qui est une plus grande maîtrise des conditions de combustion dans le four, donc une possibilité d'augmenter notablement, pour une même géométrie d'enceinte, la charge thermique, c'est-à-dire la quantité des déchets pouvant être traitée.

Cette maîtrise des conditions de combustion jointe à la limitation des déperditions de calories permet d'obtenir un rendement de conversion thermique analogue à celui obtenu avec une chaudière industrielle utilisant un combustible classique au lieu de déchets.

L'invention ainsi définie peut être mise en oeuvre sous différentes formes de réalisation plus particulières.

Quelle que soit la réalisation pratique des conduits du fluide caloporteur au niveau des parois du four, l'ensemble du circuit qui guide le fluide caloporteur du récupérateur aux parois du four et de ces parois au récupérateur en retour, peut être conçu de manière à y aussurer une circulation thermique naturelle provoquée par les variations de température que subit le fluide caloporteur. Mais l'on peut aussi préférer assurer une circulation forcée au moyen d'une pompe. D'autre part, le fluide caloporteur peut être constitué par un fluide quelconque, choisi pour ses qualités de transfert thermique, que l'on fait circuler en boucle dans un circuit fermé allant des parois du four au fluide d'utilisation contenu dans le récupérateur. Dans d'autres cas, il peut s'agir du même fluide que le fluide d'utilisation circulant dans le récupérateur, et l'installation comporte des moyens pour prélever le fluide calaporteur dans la masse d'eau d'une chaudière à vapeur constituant le récupérateur.

Au niveau du four, on préfère en général réaliser la récupération supplémentaire de chaleur par le fluide caloporteur au moins dans les parois de tous les éléments fixes du four en contact avec les fumées, soit d'une part la partie fixe qui guide les fumées du four au récupérateur, mais aussi d'autre part la façade fixe fermant le four à l'extrémité opposée du récupérateur, où sont montés en pratique le brûleur et le dispositif d'alimentation en déchets. Sur ces éléments fixes, les conduits du circuit de récupération sont juxtaposés et branchés en parallèle entre un conduit distributeur et un conduit collecteur disposés longitudinalement par rapport au four, dans une variante, les conduits forment une enveloppe entourant la paroi réfractaire du four. Dans une autre variante de mise en oeuvre de l'invention, les conduits constituent, avec des éléments de tôle soudés entre eux, une enveloppe limitant le volume occupé par les fumées dans le four. On peut faire en sorte que le circuit de récupération soit au moins en partie mobile avec la partie tournante du four et dans ce cas, avantageusement, l'enveloppe comporte deux conduits coaxiaux dans l'axe de la partie tournante du four, pour la connexion entre la partie mobile du circuit de récupération et les éléments fixes du récupérateur.

Dans tous les cas, les enveloppes de fumées, constituées par les conduits de fluide caloporteur, peuvent être doublées, intérieurement ou extérieurement, ou les deux, de revêtements réfractaires isolants qui n'ont alors pas besoin d'être étanches aux fumées.

On décrira maintenant plus en détail deux modes de réalisation particuliers de l'installation selon l'invention, choisis à titre d'exemples non limitatifs, et décrits en se référant aux dessins annexés dans lesquels:

— la fig. 1 représente schématiquement une installation selon l'invention, en coupe transversale partielle, dans une première forme de réalisation;
— la fig. 2 représente un détail de cette installation, au niveau de la partie fixe du four d'incinération des déchets;
— la fig. 3 représente la façade du four, dans une vue selon la flèche III de la fig. 1; et
— la fig. 4 illustre une autre forme de réalisation d'une installation selon l'invention, dont elle montre seulement une partie dans une coupe transversale partielle.

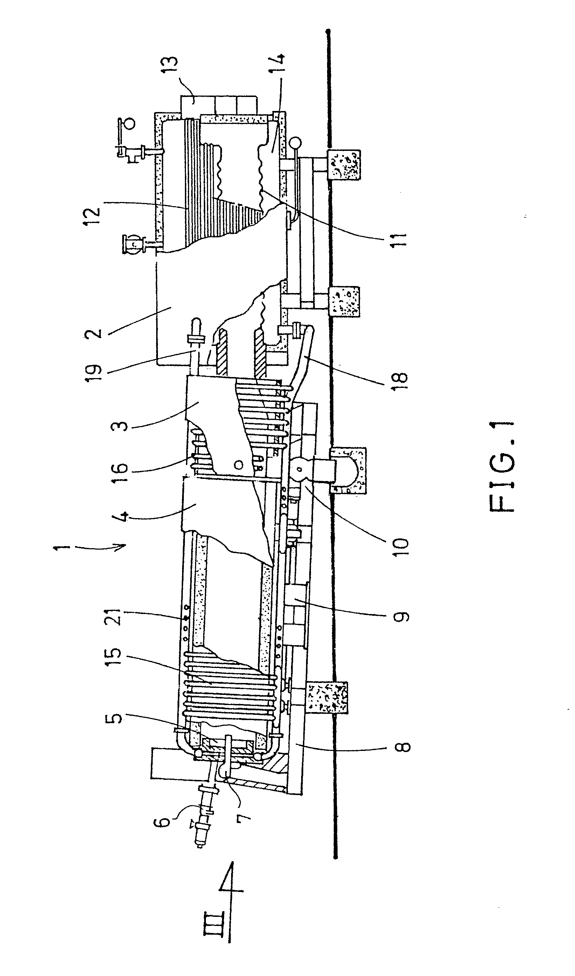

L'installation de la fig. 1 est destinée, conformément à l'invention, au traitement de déchets industriels en vue de la production d'énergie par la combustion et éventuellement la pyrolyse de ces déchets. Elle comprend essentiellement un four d'incinération 1, du type rotatif, et comme récupérateur, une chaudière à vapeur 2, directement accouplée derrière le four sur le trajet des fumées, par un dispositif de liaison 3 qui est considéré comme un élément fixe faisant partie du four.

La représentation des dessins rappelle schématiquement la conception du four 1 et de la chaudière 2 dans ce qu'elle a de classique. En ce qui concerne le four 1, on voit apparaître sur la fig. 1 la partie tournante 4, ouverte en aval sur le dispositif de liaison 3 et fermée à l'extrémité opposée par un élément de façade 5 qui est fixe. Un dispositif d'alimentation 6 permet d'introduire les déchets à brûler dans le four à travers l'élément de façade 5. Ce dernier est également traversé par un brûleur 7 alimenté en air et oxygène. Un moteur 9 permet d'entraîner la partie tournante 4 en rotation autour de son axe par l'intermédiaire de galets à friction. Un bâti 8 supporte l'ensemble du four en position inclinée par rapport au sol, de sorte que les cendres restant après la combustion des déchets s'écoulent progressivement en direction de la partie fixe du four où il est prévu une vanne d'extraction de ces cendres, 10. Pour ce qui concerne la chaudière 2, le dessin montre le conduit à paroi ondulée 11 qui prolonge à l'intérieur de la chaudière la sortie des fumées du four, et les faisceaux tubulaires 12 dans lesquels les fumées circulent ensuite avant d'être évacuées par la sortie 13. Dans cette chaudière, la chaleur sensible des fumées est récupérée pour chauffer et vaporiser de l'eau 14. La vapeur produite, ou le mélange eau-vapeur, peut être considéré comme un fluide d'utilisation qui permet de véhiculer l'énergie ainsi récupérée à l'extérieur de l'installation et jusqu'au lieu d'utilisation.

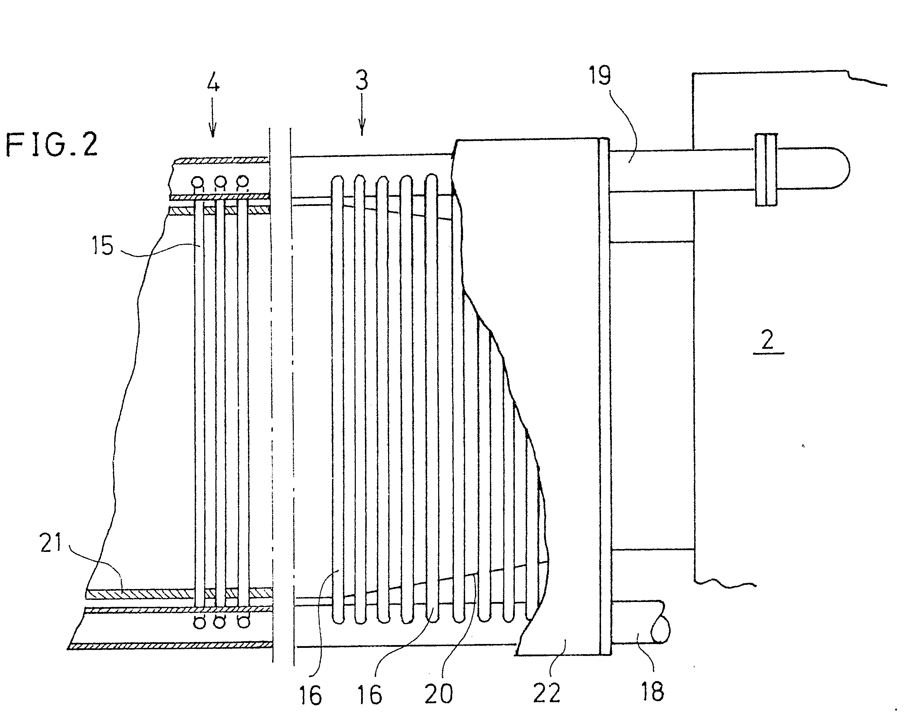

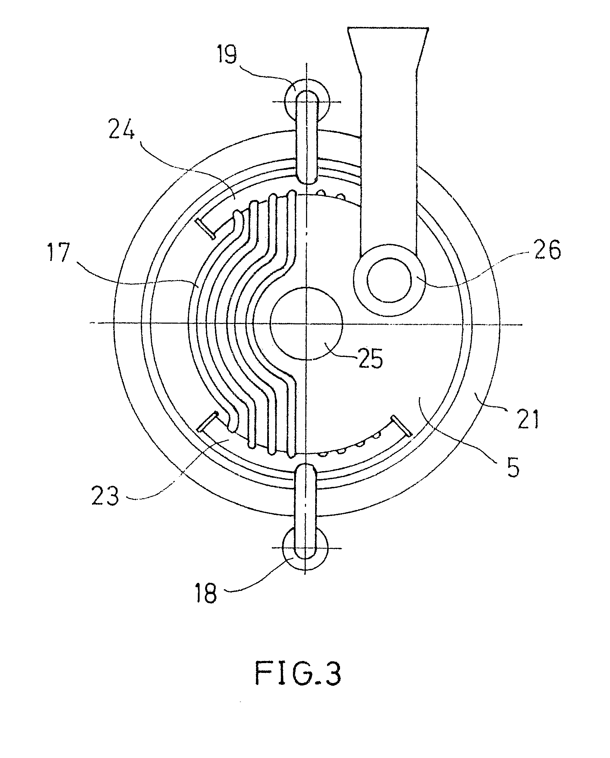

Conformément à l'invention, il est prévu de dériver une partie du mélange eau-vapeur dans un circuit de récupération thermique complémentaire comportant des conduits qui sont intégrés dans les parois du four 1 pour absorber directement à ce niveau une partie de la chaleur des fumées produites dans le four. On a fait figurer des conduits de ce genre en 15 (fig. 1) autour de la partie tournante 4 du four, en 16 (fig. 1 et 2) autour du dispositif de liaison fixe 3, et en 17 (fig. 3) contre l'élément de façade 5. Tous ces conduits sont constitués par des tubes qui sont branchés en parallèle sur des collecteurs communs, lesquels comprennent plus précisément un distributeur, d'alimentation 18, ouvert dans la masse d'eau 14 à l'intérieur de la chaudière 2, et un collecteur 19 qui débouche dans la partie haute de la chaudière. L'eau, ou le mélange eau-vapeur, à la même pression que celle qui règne dans la chaudière, traverse le circuit de récupération en circulation thermique naturelle. Le distributeur 18 longe le four 1 suivant sa génératrice inférieure, en se dédoublant pour contourner le système d'évacuation des cendres 10 et les galets du système d'entraînement de la partie tournante 4. Le collecteur 19 longe le four de la même manière, mais à son extrémité supérieure.

Autour de la partie tournante 4 du four, les tubes 15 sont disposés côte à côte entre le distributeur 18 et le collecteur 19, en demi-cercles de part et d'autre du four. Ils sont situées aussi près que possible du cylindre rotatif 21 qui forme l'enveloppe interne étanche aux fumées. Sur la fig. 1 on a représenté ce cylindre revêtu d'une épaisseur de matériau réfractaire isolant.

Par contre, les tubes 16 sont directement en contact avec les fumées lorsqu'ils sont disposés autour du dispositif fixe 3 à la liaison entre la partie tournante et la chaudière. A cet effet, les tubes sont disposés quasiment jointifs et ils sont reliés extérieurement entre eux par des éléments de tôle 20 soudés. Ces éléments et les tubes épousent la forme utile pour le conduit des fumées qui va en diminuant de section depuis la sortie de la partie tournante 4 jusqu'à l'entrée dans la chaudière. Une épaisseur de matériau réfractaire isolant peut cependant être disposée à l'intérieur du conduit étanche aux fumées. A l'extérieur de l'enveloppe formée essentiellement par les tubes 16, on a prévu un habillage externe 22 qui peut être calorifugé pour limiter les déperditions thermiques.

L'élément de façade 5 étant également une partie fixe du four, l'enveloppe étanche aux fumées y est constituée de la même manière directement par les tubes 17 (fig. 3), dont les parois sont reliées entre elles par des éléments de tôle soudés. Les tubes 17 sont branchés en parallèle sur deux collecteurs 23 et 24, en forme d'arc de cercle, dans lesquels débouchent respectivement le distributeur 18 et le collecteur 19. Ces tubes sont conformés de manière à contourner les ouvertures 25 et 26 ménagées à travers l'élément de façade pour permettre le passage du brûleur et du dispositif d'alimentation en déchets respectivement. Les éléments de tôle soudés entre les tubes complètent la fermeture vis-à-vis des fumées dans tout le cercle de la façade 5, que l'on a représentée sur la fig. 3 à l'intérieur de l'extrémité du cylindre rotatif 21.

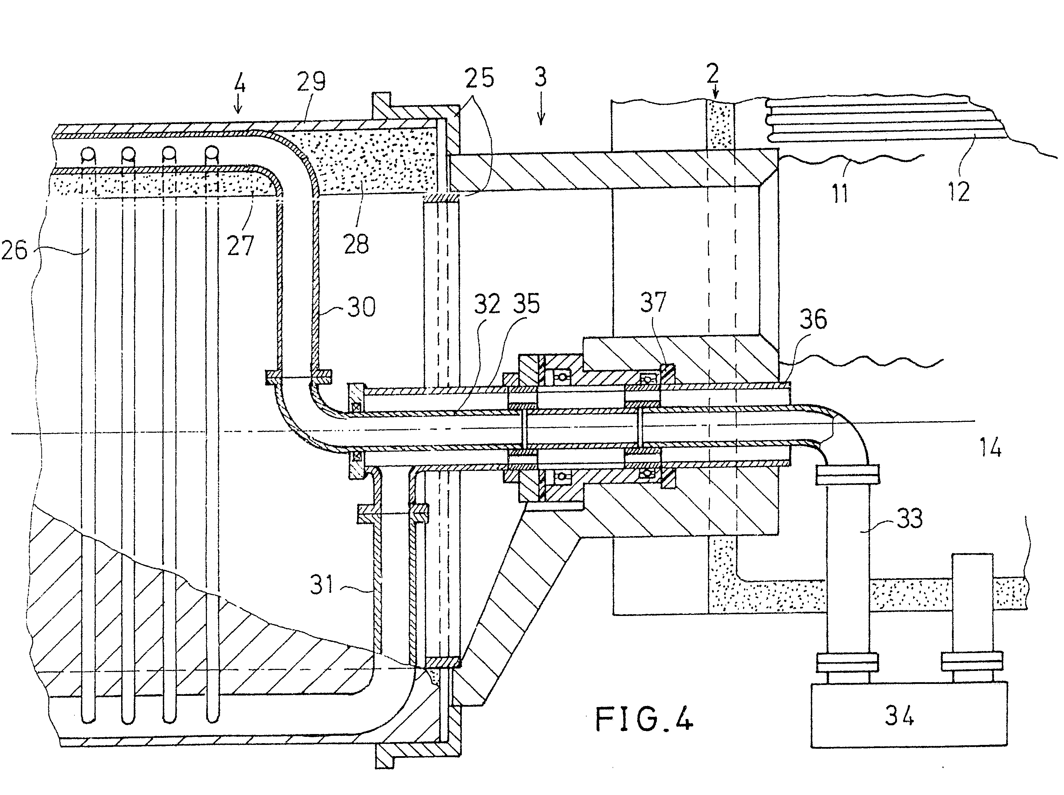

En variante des fig. 1 à 3, la fig. 4 représente partiellement une installation dans laquelle la partie des circuits de récupération thermique qui se situe au niveau de la partie tournante 4 du four est réalisée de manière à être également mobile avec cette partie tournante. Ce circuit mobile peut être combiné avec des circuits fixes réalisés comme il a été décrit ci-dessus, mais ces derniers n'ont pas été représentés pour ne pas alourdir la fig. 4. Par ailleurs, la fig. 4 ne représenté que partiellement la chaudière 2, avec son conduit de fumées 11 et ses faisceaux tubulaires 12, ainsi que la partie tournante 4 du four dont la sortie aval est connectée à l'entrée du conduit 11 par le dispositif de liaison fixe 3. On a schématiquement représenté en 25 un système de liaison étanche aux fumées entre la partie tournante et la partie fixe.

La partie fixe 3 est traversée par deux ensembles de conduits coaxiaux qui assurent les connexions entre la chaudière 2 et la partie tournante 4 du four sur le circuit de l'eau dérivée de la chaudière pour assurer la récupération thermique dans les parois de la partie tournante du four. Dans ce cas, les tubes 26 qui constituent les conduits autour du volume interne du four occupé par les fumées sont reliés entre eux par des éléments de tôle soudés, de manière à former directement l'enveloppe interne 27 étanche aux fumées, conformément à ce qui a été décrit ci-dessus pour les parties fixes. La fig. 4 montre cependant, autour de cette enveloppe 27, un calorifugeage 28 et une enveloppe externe 29 qui complètent la partie tournante 4.

Les tubes 26 sont branchés entre des collecteurs 30 et 31 qui sont coudés à l'extrémité aval de la partie tournante et ramenés dans l'axe de celle-ci. Le collecteur de distribution 30 se prolonge par un conduit axial 32 qui assure le raccordement avec la partie fixe du collecteur 33, solidaire de la chaudière 2. Une pompe 34 assure le prélèvement d'eau dans la masse 14, ainsi qu'une circulation forcée à travers le circuit de récupération. Le collecteur 31, quant à lui, débouche dans un passage annulaire ménagé autour du conduit 32 par un conduit coaxial 35. Celui-ci, solidaire de l'ensemble rotatif, se prolonge par un conduit fixe 36, qui débouche dans la chaudière 2 autour du conduit interne du collecteur de distribution. Au niveau des liaisons tournantes, il est prévu des systèmes étanches tels que 37 pour assurer l'étanchéité aux fumées à la traversée du dispositif fixe 3 d'une part, l'étanchéité au mélange eau-vapeur au débouché du conduit 36 d'autre part.

Naturellement, les détails des réalisations qui viennent d'être décrites ont été donnés à titre d'exemples et ils ne sont nullement limitatifs de l'invention. Différentes variantes de réalisation peuvent être obtenues par combinaison des diverses parties décrites et des diverses possibilités mentionnées, suivant les avantages techniques auxquels on s'intéresse plus particulièrement. Ces avantages sont principalement de trois ordres, selon qu'ils concernent les conditions thermiques de fonctionnement, la récupération d'énergie, ou la réalisation technologique.

Du point de vue thermique, l'ensemble des surfaces de parois refroidies par la circulation du fluide caloporteur se comportent comme des zones d'adsorption de chaleur relativement à l'intérieur du four. L'amplitude de cette absorption peut d'ailleurs être réglée, en revêtant les faces internes de ces éléments de matériaux réfractaires d'une épaissiseur et d'une qualité appropriées. Il est donc possible, par ce moyen et par la combinaison des différentes formes de réalisation selon l'invention, d'ajuster le profil thermique à l'intérieur de l'enceinte du four, pour obtenir la configuration désirée. Ce degré de liberté supplémentaire, par rapport aux installations de conception classique, permet une beaucoup plus grande maîtrise des conditions de combustion dans le four, en particulier. Par ailleurs, pour une même géométrie d'enceinte, la charge thermique, donc la quantité de produit pouvant être traitée, dans le cas de l'incinération par exemple, peut être notablement augmentée.

La récupération d'énergie par le circuit de fluide caloporteur peut être réalisée de manière très complète sur toutes les parois du four, de sorte que les pertes thermiques par ces parois sont alors pratiquement supprimées. Dans ces conditions, le rendement de conversion vrai de l'ensemble four et récupérateur, c'est-à-dire l'énergie obtenue à la sortie du récupérateur rapportée à l'énergie potentielle introduite dans le four, peut être analogue à ce qui est obtenu, par exemple, avec une chaudière industrielle fonc-

tionnant avec un combustible classique plutôt qu'avec des déchets.

Enfin, les avantages technologiques sont multiples. Parmi les plus importants, on peut noter la suppression, dans l'enceinte du four, d'une grande partie des revêtements réfractaires, dont la durée de vie est la plupart du temps très limitée, et leur remplacement par une structure refroidie dont la durée de vie est au contraire presque illimitée. D'autre part, on supprime toute nécessité de refroidir les accessoires du four, en particulier le brûleur et le dispositif d'alimentation en déchets, et ceux-ci travaillent dans des conditions où les sollicitations thermiques sont faibles.

## Revendications

1. Installation de traitement de déchets, comprenant un four d'incinération (1) comportant au moins une partie tournante (4) pour la combustion et/ou la pyrolyse des déchets et une partie fixe (3) de guidage des fumées produites dans le four, située entre la partie tournante (4) et un récupérateur (2) dans lequel les fumées circulent en condition d'échange thermique avec un fluide (14) d'utilisation et un circuit de récupération de la chaleur du four formé de conduits (15, 16) dans lesquels circule un fluide caloporteur caractérisé en ce que ledit circuit de récupération est formé en dérivation de la circulation du fluide d'utilisation et en ce que lesdits conduits (15, 16) forment des nappes incluant les structures de parois limitant ladite partie fixe (3) et/ou ladite partie tournante (4) du four et munies éventuellement d'un habillage calorifuge externe.

2. Installation selon la revendication 1, caractérisée en ce qu'elle comporte des moyens (18) pour prélever le fluide caloporteur dans la masse d'eau d'une chaudière à vapeur constituant le récupérateur (2).

3. Installation selon la revendication 1 ou 2, caractérisée en ce que les conduits (15, 16) du circuit de récupération sont juxtaposés et branchés en parallèle entre un conduit distributeur (18) et un conduit collecteur (19) disposés longitudinalement par rapport au four.

4. Installation selon la revendication 3, caractérisée en ce que les conduits (15) forment une enveloppe entourant la paroi réfractaire (21) du four.

5. Installation selon la revendication 3, caractérisée en ce que les conduits (16) constituent, avec des éléments de tôle (20) soudés entre eux une enveloppe limitant le volume occupé par les fumées dans le four.

6. Installations selon la revendication 3, caractérisée en ce que certains desdits conduits constituent au moins en partie une façade fixe (5) fermant le four à l'extrémité opposée au récupérateur.

7. Installation selon l'une quelconque des revendications 3 à 6, caractérisée en ce que le circuit de récupération est au moins en partie mobile avec la partie tournante du four.

8. Installation selon la revendication 7, caractérisée en ce qu'elle comporte deux conduits coaxiaux (32, 35), dans l'axe de la partie tournante du four, pour la connexion entre la partie mobile du circuit de récupération et les éléments fixes du récupérateur.

## Patentansprüche

1. Anlage zur Behandlung von Abfällen mit einem Verbrennungsofen (1) mit mindestens einem sich drehenden Teil (4) für die Verbrennung und/oder die Pyrolyse von Abfällen und mit einem festen Teil (3) für das Führen von in dem Ofen erzeugten Gasen, welches zwischen dem sich drehenden Teil (4) und einem Wärmetauscher (2) angeordnet ist, in welchem die Gase im Wärmetausch mit einem Verwertungsfließmittel (14) umlaufen, und mit einem Rückgewinnungskreislauf für Wärme des Ofens, der aus Leitungen (15, 16) gebildet ist, in welchen ein Fließkühlmittel umläuft, dadurch gekennzeichnet, daß dieser Rückgewinnungskreislauf durch Abzweigung von der Zirkulation des Verwertungsfließmittels gebildet ist und daß die Leitungen (15, 16) Mäntel bilden, welche die Wandaufbauten einschließen, welche das feste Teil (3) und/oder das sich drehende Teil (4) des Ofens begrenzen und gegebenenfalls mit einer äußeren wärmedämmenden Verkleidung versehen sind.

2. Anlage nach Anspruch 1, dadurch gekennzeichnet, daß sie Mittel (18) aufweist zum Abziehen von Fließkühlmittel in der Masse des Wassers eines Dampfkessels, welcher den Wärmetauscher (2) bildet.

3. Anlage nach Anspruch 1 oder 2, dadurch gekennzeichnet, daß die Leitungen (15, 16) des Rückgewinnungskreislaufes nebeneinander angeordnet und zwischen einer Verteilungsleitung (18) und einer Sammelleitung (19) parallel geschaltet sind, die bezüglich des Ofens längs angeordnet sind.

4. Anlage nach Anspruch 3, dadurch gekennzeichnet, daß die Leitungen (15) eine Umhüllung bilden, welche die feuerfeste Wand (21) des Ofens umgeben.

5. Anlage nach Anspruch 3, dadurch gekennzeichnet, daß die Leitungen (16) mit den zwischen ihnen befindlichen geschweißten Blechelementen (20) eine Umhüllung bilden, welche das Volumen begrenzt, das von den Gasen im Ofen eingenommen wird.

6. Anlage nach Anspruch 3, dadurch gekennzeichnet, daß gewisse Leitungen mindestens einen Teil einer festen Vorderseite (5) bilden, welche den Ofen am gegenüberliegenden Ende zum Wärmetauscher verschließt.

7. Anlage nach einem der Ansprüche 3 bis 6, dadurch gekennzeichnet, daß die Leitung des Wärmetauschers mindestens teilweise mit dem sich drehenden Teil des Ofens beweglich ist.

8. Anlage nach Anspruch 7, dadurch gekennzeichnet, daß sie zwei koaxiale Leitungen (32, 35) in der Achse des sich drehenden Ofenteiles aufweist für die Verbindung zwischen dem beweglichen Teil des Rückgewinnungskreislaufes und der festen Elemente des Wärmetauschers.

## Claims

1. Installation for the treatment of wastes, comprising a furnace (1) with at least a turning part (4) for the combustion and/or the pyrolysis of wastes and a fixed guiding part (3) for fumes produced in the furnace, located between the turning part (4) and a recuperator (2), in which the fumes circulate under condition of heat exchange with a fluid (14) of utilization and a circuit for heat recovery of the furnace formed by conduits (15, 16) in which an exothermal fluid circulates, characterized in that the circuit of recovery is formed by derivation of the circulation of the utilization fluid and that the conduits (15, 16) form jackets including wall structures limiting the said fixed part (3) and/or the said turning part (4) of the furnace and eventually provided with an external thermal insulating lining.

2. Installation according to claim 1, characterized in that it comprises means (18) to discharge the exothermal fluid in the mass of the water of a steam vessel forming the recuperator (2).

3. Installation according to claim 1 or 2, characterized in that the conduits (5, 16) of the circuit for recovery are juxtaposed and parallel branched between a distributor conduit (18) and a collector conduit (19) disposed logitudinally with respect to the furnace.

4. Installation according to claim 3, characterized in that the conduits (15) form an envelope surrounding the refractory wall (21) of the furnace.

5. Installation according to claim 3, characterized in that the conduits (16) form, with welded metal sheet elements (20) between them, an envelope limiting the volume occupied by the fumes in the furnace.

6. Installation according to claim 3, characterized in that some of the conduits form at least partially a fixed front side (5) closing the furnace at the end opposed to the recuperator.

7. Installation according to one of the claims 3 to 6, characterized in that the recovery circuit is at least partially movable with the turning part of the furnace.

8. Installations according to claim 7, characterized in that it comprises two coaxial conduits (32, 35) within the axis of the turning part of the furnace for the connection between the movable part of the recovery circuit and the fixed elements of the recuperator.

FIG. 1

FIG.2

FIG.3

FIG.4

0 053 952